# FASCICULE DE BREVET EUROPEEN

(11) **EP 2 780 992 B1**
(45) Date de publication et mention de la délivrance du brevet: **29.07.2015**
(21) Numéro de dépôt: 12719342.3
(22) Date de dépôt: 27.04.2012
(51) Int. Cl.: H02B 1/04

(54) **ENSEMBLE DE FIXATION POUR TABLEAU ELECTRIQUE**
BEFESTIGUNGSANORDNUNG FÜR EIN ELEKTRISCHES SCHALTFELD
ATTACHMENT ASSEMBLY FOR ELECTRIC BOARD

(30) Priorité: 17.11.2011 FR 1160489
(43) Date de publication de la demande: 24.09.2014
(73) Titulaire: Schneider Electric Industries SAS, 92500 Rueil-Malmaison (FR)
(72) Inventeur: MASSE, Dominique, F-91360 Epinay sur Orge (FR); CORREIA, Arthur, F-77170 Brie Comte Robert (FR); VIRON, Philippe, F-45160 Olivet (FR); BOUET, Emmanuel, F-92506 Rueil Malmaison cedex (FR)
(74) Mandataire: Dufresne, Thierry
(86) Numéro de dépôt international: PCT/EP2012/057835
(87) Numéro de publication internationale: WO 2013/072077

(56) Documents cités:
- DE-C1- 4 446 166
- FR-A- 1 033 411
- GB-A- 1 237 597

## Description

### Domaine technique de l'invention

La présente invention se rapporte à un ensemble de fixation destiné à des tableaux électriques.

L'ensemble de fixation selon l'invention comprend une grille et au moins un accessoire de fixation aptes à coopérer de manière à maintenir en position sur ladite grille des équipements divers, tels que des appareils électriques, dont la forme et les dimensions ne sont pas connues au préalable.

### Etat de la technique

L'état de la technique connaît plusieurs types d'ensembles de fixation comprenant une grille perforée coopérant avec un ou plusieurs éléments de fixation.

Par exemple, il existe un premier type d'ensembles de fixation comprenant une grille perforée de trous cylindriques avec des accessoires de fixation tels que des vis aptes à être vissés dans lesdits trous cylindriques.

Un second type d'ensembles de fixation connus comprend des paires d'éléments de fixations attachés à la grille et reliés par une sangle de longueur ajustable ou par un élastique de telle sorte que ladite sangle ou ledit élastique peut être agencé pour maintenir en place un équipement de dimension quelconque.

Il existe également un troisième type d'accessoires de fixation pouvant être clipsés dans les perforations d'une grille et aptes à maintenir en position un équipement sur ladite grille ; mais selon l'état de la technique, de tels accessoires sont dédiés au maintien en position d'équipements de hauteur donnée. Ces accessoires de fixation clipsables connus ne sont pas adaptables à des équipements de dimension quelconque.

Les ensembles de fixation connus brièvement présentés ci-dessus présentent des inconvénients, notamment ceux présentés ci-après. Ceux du premier type nécessitent un outil, par exemple un tournevis, pour fixer les éléments de fixation à la grille.

Les ensembles de fixation du deuxième type peuvent présenter le même problème ; en outre, ils ne permettent pas de maintenir en position de manière précise et sécurisée des équipements sur la grille.

Les ensembles de fixation du troisième type, comme évoqué précédemment, ne sont pas adaptables à des équipements de dimension quelconque.

Par ailleurs, le document GB1237597 décrit des attaches de fixation permettant de fixer un produit sur une grille perforée, la fixation étant réglable en hauteur. Cependant le produit est fixé aux attaches par des vis de fixation. Le document FR1033411 décrit un dispositif de fixation d'appareils sur des panneaux munis de trous répartis. Les appareils doivent cependant comporter des vis quart de tour qui traversent les trous du panneau pour fixer les appareils au panneau.

L'invention vise à pallier ces inconvénients et à proposer un accessoire de fixation et un ensemble de fixation permettant de fixer efficacement et rapidement sur une grille perforée des équipements divers, tels que des appareils électriques dont la forme et les dimensions ne sont pas connues au préalable, sans nécessiter de vis et d'outil tel qu'un tournevis.

### Exposé de l'invention

A cet effet, l'invention a pour objet un ensemble de fixation pour tableau électrique comprenant une grille et un accessoire de fixation coopérant pour maintenir en position un équipement sur la grille, la grille comportant des perforations et l'accessoire de fixation disposant de moyens d'engagement encliquetables dans les perforations pour fixer l'accessoire de fixation à la grille, l'accessoire de fixation comprenant une base s'étendant orthogonalement au plan de la grille et un bras de fixation apte à coulisser le long de la base, le bras de fixation comportant une tête destinée à être positionnée au contact de l'équipement disposé sur la grille de manière à exercer une pression sur l'équipement contre la grille.

Selon l'invention, l'accessoire de fixation comprend des moyens de maintien du bras de fixation dans une position d'arrêt fixe par rapport à la base, et le bras de fixation comprend des moyens élastiques de serrage. Les moyens de maintien et les moyens élastiques de serrage sont agencés de telle sorte que la tête du bras de fixation se trouve à une distance adéquate de la grille pour exercer une pression élastique sur l'équipement de manière à maintenir l'équipement dans une position voulue sur la grille.

Avantageusement, l'ensemble de fixation selon l'invention comprend des moyens pour désolidariser par une pression des doigts l'accessoire de la grille, de façon à pouvoir facilement retirer l'équipement.

Avantageusement, la base de l'accessoire de fixation comprend, sur sa face orientée côté grille lorsque l'accessoire est disposé de manière à être fixée par encliquetage sur ladite grille, un plot de pré-positionnement apte à s'engager dans une perforation de ladite grille.

Avantageusement, l'accessoire de fixation comprend un dispositif de sécurité pour assurer la sécurité du maintien du bras de fixation dans une position d'arrêt fixe par rapport à la base.

Avantageusement, la base de l'ensemble de fixation comprend des moyens pour faire pivoter le bras de fixation autour de ladite base, de manière à faciliter le dégagement de l'équipement.

Avantageusement, le bras de fixation peut être amovible et ainsi être retiré de l'accessoire de fixation.

Avantageusement, l'ensemble de fixation selon l'invention comprend une pluralité d'accessoires de fixation disposés pour maintenir ledit équipement dans la position voulue.

Avantageusement, les perforations de la grille présentent une section carrée.

L'invention a pour objet également un accessoire de fixation apte à être utilisé dans un tel ensemble de fixation pour tableau électrique. L'accessoire de fixation dispose de moyens d'engagement susceptibles d'être encliquetés dans des perforations d'une grille pour fixer l'accessoire de fixation à la grille. Il comprend une base et un bras de fixation apte à coulisser le long de la base, le bras de fixation comportant une tête destinée à être positionnée au contact d'un équipement disposé sur la grille de manière à exercer une pression sur l'équipement contre la grille. Selon l'invention, l'accessoire de fixation comprend des moyens de maintien du bras de fixation dans une position d'arrêt fixe par rapport à la base, et le bras de fixation comprend des moyens élastiques de serrage, les moyens de maintien et les moyens élastiques de serrage étant agencés de telle sorte que la tête du bras de fixation se trouve à une distance adéquate de la grille pour pouvoir exercer une pression élastique sur l'équipement de manière à maintenir l'équipement dans une position voulue sur la grille.

### Brève description des figures

D'autres caractéristiques et avantages vont apparaître dans la description détaillée qui suit faite en regard des dessins annexés qui représentent :
- la figure 1 : une représentation en trois dimensions d'un exemple d'ensemble de fixation selon l'invention ;
- les figures 2A et 2B : des vues en coupe de l'ensemble de fixation selon l'invention maintenant en position un équipement parallélépipédique sur une grille ;
- la figure 3 : des représentations en trois dimensions sous différents angles d'un accessoire de fixation selon l'invention.

### Description détaillée d'au moins un mode de réalisation

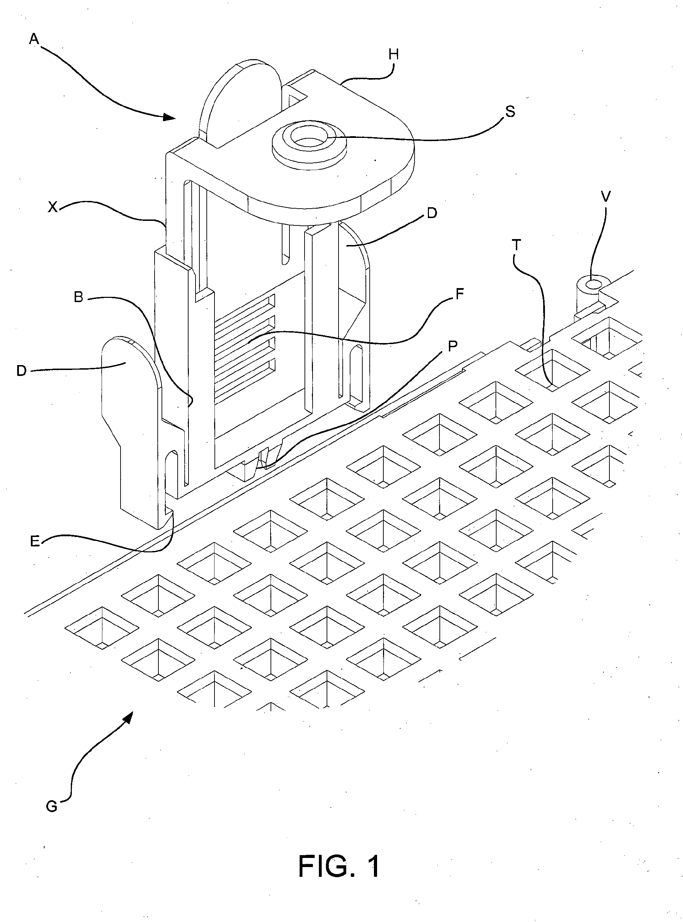

L'invention concerne un accessoire de fixation et un ensemble de fixation pour tableau électrique. La figure 1 représente un tel ensemble de fixation comprenant une grille G et un accessoire de fixation A. La grille G comprend des perforations T formant des trous de section carrée sur la figure 1, mais pouvant être de section rectangulaire ou circulaire par exemple. En vue d'être fixée dans un tableau électrique, la grille G peut comprendre des passages ou des pas de vis V.

L'accessoire de fixation A comprend une base B et un bras de fixation X apte à coulisser axialement le long de la base B. Le bras de fixation X comprend en outre une tête H destinée à venir exercer une pression sur un équipement placé entre ladite tête H et la grille G et devant être maintenu dans une position voulue. Situés sur la base B, des moyens d'encliquetage E sont aptes à s'engager dans les perforations T de la grille G de manière à fixer par encliquetage ou clipsage ledit accessoire de fixation A sur ladite grille G.

L'accessoire de fixation A est par ailleurs doté de moyens de maintien F du bras de fixation X dans une position d'arrêt fixe par rapport à la base B, réglée de telle sorte que la tête H du bras de fixation X se trouve à une distance de la grille G adéquate pour exercer ladite pression sur ledit équipement disposé à l'endroit voulu sur la grille G.

L'accessoire de fixation A représenté à la figure 1 comprend également un plot de pré-positionnement P, optionnel, situé sur la face de la base B orientée côté grille G. Ce plot de pré-positionnement P présente une forme adaptée pour s'engager dans une perforation T de manière à aider à positionner correctement l'accessoire de fixation A sur la grille G avant que les moyens d'engagement encliquetables E ne permettent de fixer l'accessoire de fixation A sur la grille G.

L'accessoire de fixation A peut également comprendre des moyens de désolidarisation D souples qui, sous l'effet d'une pression des doigts, voire d'une pression réalisée au moyen d'un outil adapté, sont aptes à désengager de la grille G les moyens d'engagement encliquetables E, de manière à libérer l'accessoire de fixation A et donc à pouvoir retirer facilement et rapidement l'équipement DEV.

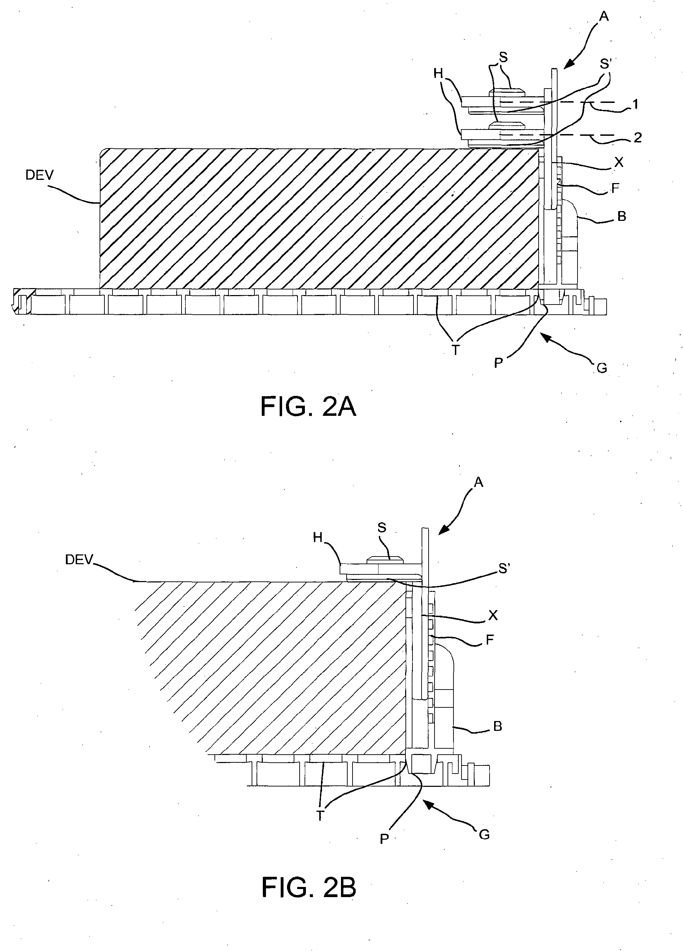

Les figures 2A et 2B représentent une vue en coupe de l'ensemble de fixation selon l'invention avec un équipement DEV disposé sur la grille G et maintenu en place par l'accessoire de fixation A, lui-même fixé sur la grille G.

Sur la figure 2A, la tête H de l'accessoire de fixation A est représentée dans deux positions :
- dans une position ouverte 1, l'équipement DEV peut être librement placé sur la grille G et sous la tête H ; il n'est pas maintenu en position ;
- dans une position serrée ou position d'arrêt 2, la tête H exerce une pression sur l'équipement DEV de sorte que celui-ci est maintenu en position sur la grille G à l'endroit voulu.

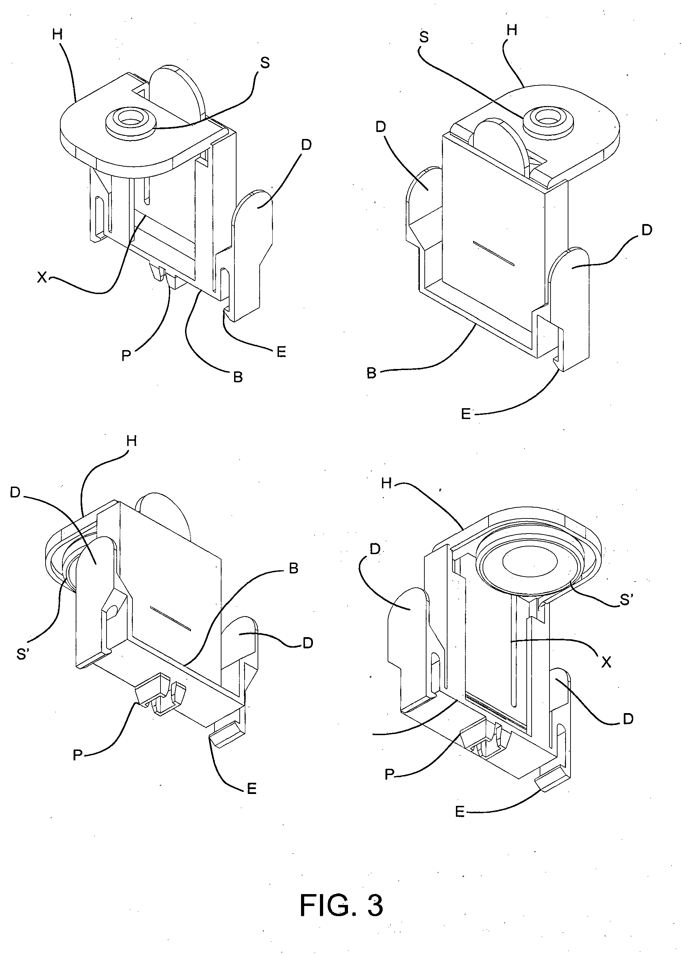

La figure 3 présente un exemple d'accessoire de fixation A selon l'invention sous différents angles. L'accessoire de fixation A représenté à la figure 3 est conforme à celui décrit aux figures 1, 2A et 2B.

Pour faire passer la tête H de la position ouverte 1 à la position d'arrêt 2, le bras de fixation X coulisse sur la base B jusqu'à la position d'arrêt dans laquelle le bras de fixation X est maintenu grâce aux moyens de maintien F. Ces moyens de maintien F du bras de fixation X dans la position d'arrêt peuvent comprendre par ailleurs un dispositif de sécurité pour assurer le verrouillage en translation (coulissement) du bras de fixation X, ainsi maintenu de manière sécurisée dans la position d'arrêt fixe par rapport à la base B. Comme indiqué dans les figures 1 et 2A, les moyens de maintien F du bras de fixation X comprennent une dent ou saillie dans le bras de fixation X et plusieurs fentes dans la base B. La dent est susceptible de coopérer avec une des fentes de la base B pour maintenir le bras de fixation X par rapport à la base B. Le fait d'avoir plusieurs fentes permet de régler la hauteur de la tête H par rapport à la grille G lorsque le bras X coulisse. La forme de la dent peut être agencée pour faciliter le coulissement du bras X seulement en direction de la grille G.

Pour exercer une pression plus importante et améliorer la précision et la sécurité du maintien en position à l'endroit voulu de l'équipement DEV sur la grille G, la tête H de l'accessoire de fixation A comprend des moyens élastiques de serrage par pression comprenant, sur l'exemple des figures 2A, 2B et 3, une zone d'appui S, sur laquelle il est possible de venir appuyer pour renforcer la pression sur l'équipement DEV placé sur la grille G et sous la tête H, ainsi qu'une pièce de contact élastique S'. Des moyens de maintien de la tête H dans la position de serrage adéquate et des moyens de libération de la tête H peuvent également prévus.

La pièce de contact S' est destinée à assurer une déformation pour l'adaptation fine au gabarit de l'équipement DEV et le maintien d'une pression de tenue sur ledit équipement DEV.

Dans un premier mode de réalisation, la tête H peut être construite en une seule pièce intégrant la zone d'appui S et la pièce de contact S'. Cette pièce de contact S' peut par exemple comporter une forme de vague. Cette forme de vague de la pièce de contact S' peut, sous l'action de la pression et de la mise en butée du bras de fixation X, se déformer de manière élastique et maintenir une pression suffisante de l'équipement DEV sur la grille G pour un ajustement fin à la hauteur de l'équipement DEV.

Alternativement et comme indiqué dans les figures 2A, 2B et 3, la pièce de contact S' peut être une pièce distincte de la tête H, placée entre la tête H et l'équipement DEV et réalisée en caoutchouc de façon à pouvoir exercer une pression élastique sur l'équipement DEV.

Selon un autre mode de réalisation, la pièce de contact S' peut comprendre un ressort placé entre le bras de fixation X et la base B, ledit ressort exerçant sur le bras de fixation X une force de rappel entraînant le maintien de la pression élastique appliquée par le bras de fixation X via la tête H sur l'équipement DEV.

Le bras de fixation X est en outre de préférence doté d'un organe de déverrouillage composé d'une zone d'appui - ou de deux zones d'appui - sur laquelle une pression peut être appliquée, et qui permet de libérer le verrouillage à la translation du bras de fixation X.

Pour le démontage de l'équipement DEV, une action appliquée sur le bras de fixation X, perpendiculaire à la grille G et orientée du côté opposé à la grille G, permet alors de translater ou coulisser vers le haut le bras de fixation X et de libérer ainsi l'équipement DEV.

Enfin, pour faciliter le dégagement de l'équipement DEV lorsque l'utilisateur souhaite le retirer du tableau électrique, l'accessoire de fixation A peut comprendre, au niveau de la base B, des moyens pour faire pivoter le bras de fixation X autour de ladite base B.

Alternativement, dans le même but, le bras de fixation X peut être amovible et être retiré de l'accessoire de fixation A, la base B restant fixée à la grille G.

Les différents éléments de la grille G et de l'accessoire A de l'ensemble de fixation peuvent avantageusement être réalisés en matériau plastique.

En résumé, l'invention présente l'avantage de proposer un ensemble de fixation pour tableau électrique permettant de maintenir en position très simplement et très rapidement tout équipement de dimension quelconque sur un grille fixée dans un tableau électrique, la mise en place et la libération des équipements pouvant être réalisés sans outil, tel qu'un tournevis. Les accessoires de fixation A sont en effet facilement montables et démontables manuellement de la grille G, la tête H des accessoires A est facilement réglable en hauteur et l'équipement est juste maintenu par coincement entre la tête H des accessoires de fixation A et la grille G, sans nécessiter de vis de fixation ou de réglage par exemple.

## Revendications

1. Ensemble de fixation pour tableau électrique comprenant une grille (G) et un accessoire de fixation (A) coopérant pour maintenir en position un équipement (DEV) sur la grille (G), la grille (G) comportant des perforations (T) et l'accessoire de fixation (A) disposant de moyens d'engagement (E) encliquetables dans les perforations (T) pour fixer l'accessoire de fixation (A) à la grille (G), l'accessoire de fixation comprenant une base (B) s'étendant orthogonalement au plan de la grille (G) et un bras de fixation (X) apte à coulisser le long de la base (B), le bras de fixation (X) comportant une tête (H) destinée à être positionnée au contact de l'équipement (DEV) disposé sur la grille (G) de manière à exercer une pression sur l'équipement (DEV) contre la grille (G),
**caractérisé en ce que** l'accessoire de fixation (A) comprend des moyens de maintien (F) du bras de fixation (X) dans une position d'arrêt fixe par rapport à la base (B), et **en ce que** le bras de fixation (X) comprend des moyens élastiques de serrage (S, S'), les moyens de maintien (F) et les moyens élastiques de serrage (S, S') étant agencés de telle sorte que la tête (H) du bras de fixation (X) se trouve à une distance adéquate de la grille (G) pour exercer une pression élastique sur l'équipement (DEV) de manière à maintenir l'équipement (DEV) dans une position voulue sur la grille (G).

2. Ensemble de fixation selon la revendication 1, **caractérisé en ce que** l'accessoire de fixation (A) comprend des moyens (D) pour désolidariser par une pression des doigts l'accessoire de fixation (A) de la grille (G).

3. Ensemble de fixation selon l'une des revendications précédentes, **caractérisé en ce que** la base (B) comprend, sur sa face orientée côté grille (G) lorsque l'accessoire de fixation (A) est disposé de manière à être fixé par encliquetage sur la grille (G), un plot de pré-positionnement (P) apte à s'engager dans une perforation (T) de la grille (G).

4. Ensemble de fixation selon l'une des revendications précédentes, **caractérisé en ce que** l'accessoire de fixation (A) comprend un dispositif de sécurité pour assurer la sécurité du maintien du bras de fixation (X) dans une position d'arrêt fixe par rapport à la base (B).

5. Ensemble de fixation selon l'une des revendications précédentes, **caractérisé en ce que** la base (B) comprend des moyens pour faire pivoter le bras de fixation (X) autour de ladite base (B), de manière à faciliter le dégagement de l'équipement (D).

6. Ensemble de fixation selon l'une des revendications précédentes, **caractérisé en ce que** le bras de fixation (X) est amovible et peut être retiré de l'accessoire de fixation (A).

7. Ensemble de fixation selon l'une des revendications précédentes, **caractérisé en ce qu'**il comprend une pluralité d'accessoires de fixation (A) disposés pour maintenir l'équipement (DEV) dans la position voulue.

8. Ensemble de fixation selon l'une des revendications précédentes, **caractérisé en ce que** les perforations (T) de la grille (G) présentent une section carrée.

9. Accessoire de fixation (A) pour tableau électrique disposant de moyens d'engagement susceptibles (E) d'être encliquetés dans des perforations (T) d'une grille (G) pour fixer l'accessoire de fixation (A) à la grille (G), l'accessoire de fixation comprenant une base (B) et un bras de fixation (X) apte à coulisser le long de la base (B), le bras de fixation (X) comportant une tête (H) destinée à être positionnée au contact d'un équipement (DEV) disposé sur la grille (G) de manière à exercer une pression sur l'équipement (DEV) contre la grille (G),
**caractérisé en ce que** l'accessoire de fixation (A) comprend des moyens de maintien (F) du bras de fixation (X) dans une position d'arrêt fixe par rapport à la base (B), et **en ce que** le bras de fixation (X) comprend des moyens élastiques de serrage (S, S'), les moyens de maintien (F) et les moyens élastiques de serrage (S, S') étant agencés de telle sorte que la tête (H) du bras de fixation (X) se trouve à une distance adéquate de la grille (G) pour pouvoir exercer une pression élastique sur l'équipement (DEV) de manière à maintenir l'équipement (DEV) dans une position voulue sur la grille (G).

## Patentansprüche

1. Befestigungsanordnung für ein elektrisches Schaltfeld, aufweisend ein Gitter (G) und ein Befestigungselement (A), die zusammenwirken, um eine Einrichtung (DEV) auf dem Gitter (G) in Position zu halten, wobei das Gitter (G) Perforationen (T) aufweist und das Befestigungselement (A) über Eingriffmittel (E) verfügt, die in den Perforationen (T) einrastbar sind, um das Befestigungselement (A) am Gitter (G) zu befestigen, wobei das Befestigungselement eine Basis (B), die sich orthogonal zur Ebene des Gitters (G) erstreckt und einen Befestigungsarm (X), der entlang der Basis (B) verschiebbar ist, aufweist, wobei der Befestigungsarm (X) einen Kopf (H) aufweist, der dazu bestimmt ist, in Kontakt mit der Einrichtung (DEV), die auf dem Gitter (G) angeordnet ist, positioniert zu werden, um einen Druck auf die Einrichtung (DEV) gegen das Gitter (G) auszuüben,
**dadurch gekennzeichnet, dass** das Befestigungselement (A) Mittel zum Halten (F) des Befestigungsarms (X) in einer Arretierposition, die in Bezug auf die Basis (B) fest ist, aufweist, und dadurch, dass der Befestigungsarm (X) elastische Mittel zum Klemmen (S, S') aufweist, wobei die Mittel zum Halten (F) und die elastischen Mittel zum Klemmen (S, S') derart angebracht sind, dass sich der Kopf (H) des Befestigungsarms (X) in einem geeigneten Abstand zum Gitter (G) befindet, um einen elastischen Druck auf die Einrichtung (DEV) auszuüben, um die Einrichtung (DEV) in einer gewünschten Position auf dem Gitter (G) zu halten.

2. Befestigungsanordnung nach Anspruch 1, **dadurch gekennzeichnet, dass** das Befestigungselement (A) Mittel (D) zum Lösen des Befestigungselements (A) von dem Gitter (G) durch Drücken mit den Fingern aufweist.

3. Befestigungsanordnung nach einem der vorhergehenden Ansprüche, **dadurch gekennzeichnet, dass** die Basis (B), auf ihrer zum Gitter (G) ausgerichteten Seite, wenn das Befestigungselement (A) angeordnet ist, um durch Einrasten auf dem Gitter (G) befestigt zu werden, einen Vorpositionierungskontakt (P) aufweist, der geeignet ist, in eine Perforation (T) des Gitters (G) einzugreifen.

4. Befestigungsanordnung nach einem der vorhergehenden Ansprüche, **dadurch gekennzeichnet, dass** das Befestigungselement (A) eine Sicherungsvorrichtung aufweist, um das sichere Halten des Befestigungsarms (X) in einer festen Arretierposition in Bezug auf die Basis (B) zu gewährleisten.

5. Befestigungsanordnung nach einem der vorhergehenden Ansprüche, **dadurch gekennzeichnet, dass** die Basis (B) Mittel zum Drehen des Befestigungsarms (X) um die Basis (B) aufweist, um das Abnehmen der Einrichtung (D) zu erleichtern.

6. Befestigungsanordnung nach einem der vorhergehenden Ansprüche, **dadurch gekennzeichnet, dass** der Befestigungsarm (X) abnehmbar ist und von dem Befestigungselement (A) zurückgezogen werden kann.

7. Befestigungsanordnung nach einem der vorhergehenden Ansprüche, **dadurch gekennzeichnet, dass** sie eine Vielzahl von Befestigungselementen (A) aufweist, die angeordnet sind, um die Einrichtung (DEV) in der gewünschten Position zu halten.

8. Befestigungsanordnung nach einem der vorhergehenden Ansprüche, **dadurch gekennzeichnet, dass** die Perforationen (T) des Gitters (G) einen quadratischen Querschnitt aufweisen.

9. Befestigungselement (A) für ein elektrisches Schaltfeld, das über Eingriffmittel (E) verfügt, die zum Einrasten in Perforationen (T) eines Gitters (G) geeignet sind, um das Befestigungselement (A) am Gitter (G) zu befestigen, wobei das Befestigungselement eine Basis (B) und einen Befestigungsarm (X), der entlang der Basis (B) verschiebbar ist, aufweist, wobei der Befestigungsarm (X) einen Kopf (H) aufweist, der dazu bestimmt ist, in Kontakt mit einer Einrichtung (DEV) positioniert zu werden, die auf dem Gitter (G) angeordnet ist, um einen Druck auf die Einrichtung (DEV) gegen das Gitter (G) auszuüben,
**dadurch gekennzeichnet, dass** das Befestigungselement (A) Mittel zum Halten (F) des Befestigungsarms (X) in einer Arretierposition, die in Bezug auf die Basis (B) fest ist, aufweist, und dadurch, dass der Befestigungsarm (X) elastische Mittel zum Klemmen (S, S') aufweist, wobei die Mittel zum Halten (F) und die elastischen Mittel zum Klemmen (S, S') derart angebracht sind, dass sich der Kopf (H) des Befestigungsarms (X) in einem geeigneten Abstand zum Gitter (G) befindet, um einen elastischen Druck auf die Einrichtung (DEV) ausüben zu können, um die Einrichtung (DEV) in einer gewünschten Position auf dem Gitter (G) zu halten.

## Claims

1. An attachment assembly for electric boards, comprising a grating (G) and an attachment accessory (A) cooperating to retain a device (DEV) in position on the grating (G), the grating (G) including perforations (T) and the attachment accessory (A) having engagement means (E) that can be snap-fitted into the perforations (T) to attach the attachment accessory (A) to the grating (G), the attachment accessory comprising a base (B) extending orthogonally to the plane of the grating (G) and an attachment arm (X) adapted to slide along the base (B), the attachment arm (X) including a head (H) designed to be positioned in contact with the device (DEV) disposed on the grating (G) in such a manner as to exert a pressure on the device (DEV) against the grating (G),
**characterized in that** the attachment accessory (A) comprises means (F) for supporting the attachment arm (X) in a stop position that is fixed relative to the base (B), and **in that** the attachment arm (X) comprises elastic clamping means (S, S'), the supporting means (F) and the elastic clamping means (S, S') being such that the head (H) of the attachment arm (X) is at an appropriate distance from the grating (G) to exert an elastic pressure on the device (DEV) so as to retain the device (DEV) in a required position on the grating (G).

2. The attachment assembly as claimed in claim 1, **characterized in that** the attachment accessory (A) comprises means (D) for detaching the attachment accessory (A) from the grating (G) by applying pressure with the fingers.

3. The attachment assembly as claimed in either one of the preceding claims, **characterized in that** the base (B) comprises, on its face oriented toward the grating (G) when the attachment accessory (A) is disposed in such a manner as to be fixed by snap-fitting onto the grating (G), a pre-positioning post (P) adapted to engage in a perforation (T) of the grating (G).

4. The attachment assembly as claimed in any one of the preceding claims, **characterized in that** the attachment accessory (A) comprises a safety device for safely retaining the attachment arm (X) in a stop position that is fixed relative to the base (B).

5. The attachment assembly as claimed in any one of the preceding claims, **characterized in that** the base (B) comprises means for causing the attachment arm (X) to pivot about said base (B) in such a manner as to facilitate disengagement of the device (DEV).

6. The attachment assembly as claimed in any one of the preceding claims, **characterized in that** the attachment arm (X) is removable and may be withdrawn from the attachment accessory (A).

7. The attachment assembly as claimed in any one of the preceding claims, **characterized in that** it comprises a plurality of attachment accessories (A) disposed to retain the device (DEV) in the required position.

8. The attachment assembly as claimed in any one of the preceding claims, **characterized in that** the perforations (T) in the grating (G) have a square section.

9. An attachment accessory (A) for electric boards, having engagement means (E) adapted to be snap-fitted into perforations (T) of a grating (G) to attach the attachment accessory (A) to the gating (G), the attachment accessory comprising a base (B) and an attachment arm (X) adapted to slide along the base (B), the attachment arm (X) including a head (H) designed to be positioned in contact with a device (DEV) disposed on the grating (G) in such a manner as to exert a pressure on the device (DEV) against the grating (G),
**characterized in that** the attachment accessory (A) comprises means (F) for supporting the attachment arm (X) in a stop position that is fixed relative to the base (B), and **in that** the attachment arm (X) comprises elastic clamping means (S, S'), the supporting means (F) and the elastic clamping means (S, S') being such that the head (H) of the attachment arm (X) is at an appropriate distance from the grating (G) to be able to exert an elastic pressure on the device (DEV) in such a manner as to retain the device (DEV) in a required position on the grating (G).
